# EUROPEAN PATENT APPLICATION

(11) **EP 3 196 957 A1**
(43) Date of publication of application: **26.07.2017**
(21) Application number: 17151887.1
(22) Date of filing: 17.01.2017
(51) Int. Cl.: H01M 2/02, H01M 10/0525

(54) **PACKAGING HOUSING FOR LI-ION BATTERY, METHOD FOR PREPARING THE SAME AND LI-ION BATTERY HAVING THE SAME**

(30) Priority: 22.01.2016 CN 201610044724
(71) Applicant: NingDe Amperex Technology Limited, 352100 Ningde City Fujian (CN)
(72) Inventor: Geng, Jibin, Ningde City, Fujian 352100 (CN); Fang, Hongxin, Ningde City, Fujian 352100 (CN); Duan, Dong, Ningde City, Fujian 352100 (CN); Guo, Peipei, Ningde City, Fujian 352100 (CN)
(74) Representative: Petraz, Gilberto Luigi

(57) **Abstract**

The present application relates to the field of Li-ion batteries and, specifically, relates to a packaging housing for a Li-ion battery, a method for preparing the packaging housing for a Li-ion battery. A bare cell of the Li-ion battery is packaged by the packaging housing of the present application, the packaging housing comprises, successively from inside to outside, a sealing housing layer, a metal coating layer and a plastic coating layer; after the sealing housing layer packages the bare cell of the Li-ion battery and then is sealed, the metal coating layer and the plastic coating layer are successively provided on an external surface of the sealing housing layer. Since each layer of the materials of the packaging housing of the present application is processed onto the external surface of the product during the preparing or packaging process of the product, the thickness and strength of the folding edges and folding corners thereof are kept unchanged, the packaging defects caused by the impact molding process are avoided, thus, the packaging reliability of the product is significantly improved and the housing has no tensile deformation and wrinkles, so as to avoid appearance defects, improve the appearance of the product and improve the energy density of the battery.

## Description

### TECHNICAL FIELD

The present application relates to the field of Li-ion batteries and, specifically, relates to a packaging housing for a Li-ion battery, a method for preparing the packaging housing and a Li-ion battery having the packaging housing.

### BACKGROUND

Conventional Li-ion batteries adopt a packaging composite film formed by extrusion and composition of nylon thin film, aluminum foil and sealing material as the housing. During the preparation of the battery, the packaging composite film is made into the housing for a battery through an impact molding process, and then the bare cell is packaged by the housing so as to form a battery. During the impact molding process, the housing bears stretching and extruding, the housing of the stretching area at the corner position and the like becomes thinner, correspondingly, the nylon layer, the aluminum foil layer and the sealing material layer will also become thinner. Usually, the thickness of the areas such as the corner position and the edge of the housing which are stretched during the forming process of the housing will be decreased to 40%~80% of their original thickness. As a result, defects such as pinholes, fractures etc. will occur to the aluminum foil layer, so that the sealing performance will deteriorate, thereby influencing the performance and service life of the battery.

With respect to the defects in the prior art, the present application is provided.

### SUMMARY

A primary invention object of the present application is to provide a packaging housing for a Li-ion battery.

A second invention object of the present application is to provide a method for preparing the packaging housing for a Li-ion battery,

A third invention object of the present application is to provide a Li-ion battery having the packaging housing.

In order to accomplish the objects of the present application, the adopted technical solutions include:

A packaging housing for a Li-ion battery is provided, a bare cell of the Li-ion battery is packaged by the packaging housing, the packaging housing comprises, successively from inside to outside, a sealing housing layer, a metal coating layer and a plastic coating layer; after the sealing housing layer packages the bare cell of the Li-ion battery and then is sealed, the metal coating layer and the plastic coating layer are successively provided on an external surface of the sealing housing layer.

Preferably, a thickness of the metal coating layer at a folding edge and a folding corner of the packaging housing is no less than a thickness of the metal coating layer at a flat surface of the packaging housing; preferably, thicknesses of the sealing housing layer and the plastic coating layer at the folding edge and the folding corner of the packaging housing are no less than thicknesses of the sealing housing layer and the plastic coating layer at the flat surface of the packaging housing, respectively; further preferably, thicknesses of the sealing housing layer, the metal coating layer and the plastic coating layer at the folding edge and the folding comer of the packaging housing are the same as thicknesses of the sealing housing layer, the metal coating layer and the plastic coating layer at the flat surface of the packaging housing, respectively.

Preferably, cambered surfaces of the sealing housing layer, the metal coating layer and the plastic coating layer formed at a folding edge or a folding corner are coaxial cambered surfaces.

Preferably, a material of the sealing housing layer is at least one selected from a group consisting of polyethylene, polypropylene, ester of polyethylene or polypropylene and ionic crosslinking material of polyethylene or polypropylene; the polyethylene is selected from a group consisting of low density polyethylene, medium density polyethylene and high density polyethylene; the polypropylene is selected from a group consisting of homopolymerized polypropylene, block copolymerized polypropylene and irregular polypropylene; a material of the metal coating layer is at least one selected from a group consisting of metal, metal alloy, metal oxide and ceramics; the metal is selected from a group consisting of aluminum, iron, silver, copper, nickel, manganese, tin, titanium, zirconium and vanadium; a material of the plastic coating layer is at least one selected from a group of polyamide resin, polyolefin, polycarbonate and fluorine-containing resin.

Preferably, the material of the plastic coating layer is added with a decorative additive.

Preferably, before the metal coating layer is provided, the sealing housing layer is processed by shaping, the shaping is to remove part or all of a sealing edge of a sealing area formed after sealing.

Preferably, a thickness of the sealing housing layer is 15 ~ 1000µm, preferably 15~100µm; a thickness of the metal coating layer is 1~500µm, preferably 5~200µm; a thickness of the plastic coating layer is 5~1000µm, preferably 5~ 200µm.

The present application further relates to a method for preparing the packaging housing for the Li-ion battery, including: firstly preparing a sealing housing layer which fits a shape of a bare cell of the Li-ion battery, packaging the bare cell into the sealing housing layer and sealing the sealing housing layer; providing a metal coating layer at an external surface of the sealing housing layer by vacuum evaporation, cathode sputtering, ion plating or spray plating, and then providing a plastic coating layer at an external surface of the metal coating layer by spray coating, dip coating, brush coating or paint spraying.

Preferably, the sealing housing layer is formed by impact molding or injection molding; the sealing housing layer is shaped after the bare cell is packaged and sealed therein, and part or all of a sealing edge of a sealing area formed after packaging and sealing are removed.

The present application further relates to a Li-ion battery with the packaging housing.

The technical effect achieved by the present application includes:

Firstly, since the housing in the prior art is formed by housing molding of the composited packaging composite film which is already made, the folding edge and the folding corner of which are stretched, the thickness thereof is reduced; however, each layer of the materials of the packaging housing structure of the present application are respectively processed onto the external surface of the product during the preparation and packaging process of the product, thus, the thickness and strength at the folding edge and the folding corner are kept unchanged, so as to avoid the packaging defects caused in the impact molding process, thereby significantly improving the packaging reliability of the product.

Secondly, during the preparation and packaging of the packaging housing structure of the present application, there is no need to mold the housing for the final product, the housing has no tensile deformation or wrinkles, so as to avoid the appearance defects and improve the appearance of the product.

Moreover, since there is no housing molding and forming process, the packing housing structure of present application can have much thinner housing at the same level of requirements on sealing, so as to reduce the volume of the product and improve the energy density of the battery.

Finally, in the present application, part or all of the sealing edge of the sealing area of the packaging structure formed after sealing can be removed by shaping, so as to further reduce the volume of the product and further improve the energy density of the battery.

### BRIEF DESCRIPTION OF DRAWINGS

FIG. 1 is a schematic diagram of appearance of a packaging housing for a conventional Li-ion battery;
FIG. 2 is a sectional view of a packaging housing for a conventional Li-ion battery;
FIG. 3 is an enlarged view of section A in the sectional view of the packaging housing for a conventional Li-ion battery;
FIG. 4 is a schematic diagram of appearance of a packaging housing for a Li-ion battery according to an embodiment of the present application;
FIG. 5 is a sectional view of a packaging housing for a Li-ion battery according to an embodiment of the present application;
FIG. 6 is an enlarged view of section B in the sectional view of the packaging housing for a Li-ion battery according to an embodiment of the present application;
FIG. 7 is a sectional view of a packaging housing for a Li-ion battery after step 1 in Embodiment 1 of the present application;
FIG. 8 is an enlarged view of section C in the sectional view after step 1 in Embodiment 1 of the present application;
FIG. 9 is a sectional view of a packaging housing for a Li-ion battery after step 3 in Embodiment 1 of the present application;
FIG. 10 is an enlarged view of section D in the sectional view after step 3 in Embodiment 1 of the present application;
FIG. 11 is a schematic diagram of appearance of a packaging housing according to Embodiment 2 of the present application;
FIG. 12 is a schematic diagram of appearance of bare cell 2 after a sealing housing layer 3 is provided at an external surface of bare cell 2 according to Embodiment 3 of the present application;
FIG. 13 is a sectional view of bare cell 2 after sealing housing layer 3 is provided at an external surface of bare cell 2 according to Embodiment 3 of the present application;
FIG. 14 is an enlarged view of section E in the sectional view after sealing housing layer 3 is provided according to Embodiment 3 of the present application;
FIG. 15 is a sectional view of a packaging housing according to Embodiment 3 of the present application;
FIG. 16 is an enlarged view of section F in the sectional view of the packaging housing according to Embodiment 3 of the present application;
FIG. 17 is a schematic diagram of appearance of the packaging housing according to Embodiment 3 of the present application.

### Reference signs:

1-battery housing for conventional battery;
11-nylon layer, 12-aluminum foil layer, 13-sealing material layer;
2-bare cell;
3-sealing housing layer;
4-metal coating layer;
5-plastic coating layer;
6-electrode tab.

### DESCRIPTION OF EMBODIMENTS

The present application is further illustrated with reference to the following embodiments. It should be understood that, these embodiments are merely used to illustrate the present application rather than limit the scope of the present allocation.

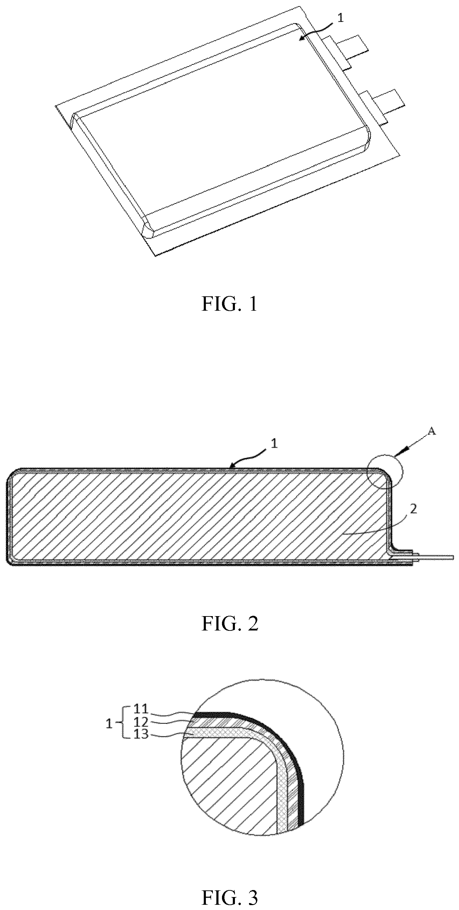

The schematic diagram and sectional view of a packaged conventional Li-ion battery are shown in FIGs.1-3. The bare cell 2 is completely packaged in the interior of a battery housing 1, the battery housing 1 is a structure stacked by a nylon layer 11, an aluminum foil layer 12 and a sealing material layer 13. It can be seen from the figures that, the thicknesses of the areas such as the corner position, the edge and the like of the housing that are stretched during the forming process of the housing are reduced to 40%∼80% of the original thicknesses. As a result, defects such as pinholes, fractures and the like will occur to the aluminum foil layer 12, which causes deterioration of the sealing performance, thereby influencing the performance and service life of the battery.

The packaging housing structure of the present application adopts the sealing techniques of sealing film, metal coating and metal surface plastic coating, so as to form a housing structure including a sealing housing layer, a metal coating layer and a plastic coating layer, thereby achieving reliable packaging of the Li-ion battery. The characteristics of the present application include: the sealing housing layer is sealed after the bare cell is packaged therein, and then the metal coating layer and the plastic coating layer are successively provided at the external surface of the sealing housing layer.

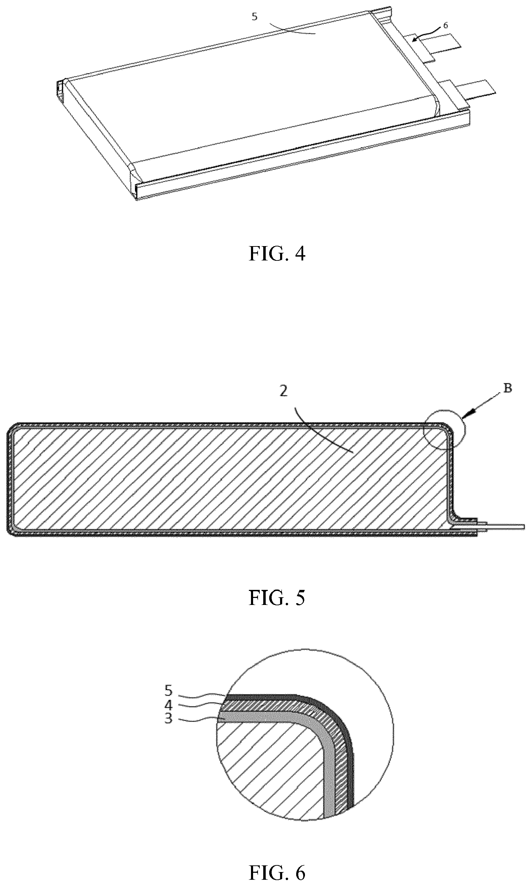

The schematic diagram and sectional view of a packaging housing for a Li-ion battery of the present application are shown in FIGs. 4-6. The packaging housing outside the bare cell 2 of the Li-ion battery, from inside to outside, includes: a sealing housing layer 3, a metal coating layer 4 and a plastic coating layer 5. The bare cell is completely packaged by the sealing housing layer 3, the outer layer of the sealing housing layer 3 is closely packaged by the metal coating layer 4, and the metal coating layer 4 is completely packaged by the plastic coating layer 5.

The sealing housing layer fits the shape of the bare cell of the Li-ion battery, covers on the bare cell of the Li-ion battery and then is sealed, preferably, the sealing is achieved by the manner of heating. The sealing housing layer can be prepared by techniques such as impact molding and injection molding, etc.

The metal coating layer is formed on the sealing housing layer by vacuum evaporation, ion plating or spray coating etc., configured for moisture prevention.

The plastic coating layer is formed on the metal coating layer by plastic spaying, configured for appearance protection and surface decoration. An additional decoration layer can be further provided at the surface of the plastic coating layer, so as to adjust the color and appearance.

The expression "fit" in the present application shall be interpreted as: the size and shape of the sealing housing layer are completely identical to those of the bare cell, or size and shape of the sealing housing layer have certain assembly deviations with respect to those of the bare cell, i.e., slightly larger or smaller than those of the bare cell.

Preferably, before the metal coating layer is provided, the sealing housing layer is shaped, and the shaping includes removing part or all of the sealing edge of the sealing area formed by sealing.

As shown in FIG. 6, the thickness of the metal coating layer at a folding edge and a folding corner of the packaging housing is no less than the thickness of the metal coating layer at a flat surface of the packaging housing; preferably, the thicknesses of the sealing housing layer and the plastic coating layer at the folding edge and the folding corner of the packaging housing are no less than the thicknesses of the sealing housing layer and the plastic coating layer at the flat surface of the packaging housing, respectively; further preferably, the thicknesses of the sealing housing layer, the metal coating layer and the plastic coating layer at the folding edge and the folding corner of the packaging housing are the same as the thicknesses of the sealing housing layer, the metal coating layer and the plastic coating layer at the flat surface of the packaging housing, respectively. Preferably, cambered surfaces of the sealing housing layer, the metal coating layer and the plastic coating layer formed at the folding edge or the folding corner are coaxial cambered surfaces.

In the present application, the material of the sealing housing layer is at least one selected from a group consisting of polyethylene, polypropylene, ester of polyethylene or polypropylene and ionic crosslinking material of polyethylene or polypropylene; the polyethylene is selected from a group consisting of low density polyethylene, medium density polyethylene and high density polyethylene; the polypropylene is selected from a group consisting of homopolymerized polypropylene, block copolymerized polypropylene and irregular polypropylene. The material of the sealing housing layer is preferred to be homopolymerized polypropylene.

In the present application, the material of the metal coating layer is at least one selected from a group consisting of metal, metal alloy, metal oxide and ceramics; the metal is selected from a group consisting of aluminum, iron, silver, copper, nickel, manganese, tin, titanium, zirconium and vanadium; and the material of the metal coating layer is preferably selected from a group consisting of aluminum, copper, aluminum-copper alloy and copper-nickel alloy.

In the present application, the material of the plastic coating layer is at least one selected from a group of polyamide resin, polyolefin, polycarbonate and fluorine-containing resin, and polyamide resin is preferred. The material of the plastic coating layer is added with a decorative matting additive or a decorative dye additive, such as Inconel ICV543 or Univure 805 from DIC Ink Co., Ltd. According to specific demands, the sealing housing layer may be prepared to include one layer or two layers of the same material above, or to be composited with different layers of different materials. The plastic coating layer may also be prepared to include one or more layers of the same material above, or to be composited with different layers of different materials according to actual demands.

The thickness of the sealing housing layer is 15∼1000µm, preferably 15∼ 100µm; the thickness of the metal coating layer is 1∼500µm, preferably 5∼200µm; the thickness of the plastic coating layer is 5~1000µm, preferably 5∼200µm. With respect to conventional small-sized Li-ion batteries or small-sized products, the thickness of the three-layer composite structure of the present application can be reduced to 25∼80µm, which can achieve reliable packaging and in the meantime improves the energy density of the battery or the volume of the product; with respect to power type Li-ion batteries or other large-sized products or products for special use, the thickness of the housing can be increased to 200∼500µm or be prepared according to actual demands, so as to improve the housing strength and sealing performance.

The present application further relates to a method for preparing the packaging housing for a Li-ion battery, including:
1. A sealing housing layer which fits the shape of the bare cell for a Li-ion battery is prepared by impact molding or injection molding, the bare cell is packaged into the sealing housing, and then is sealed;
2. A metal coating layer is formed at the external surface of the sealing housing layer by vacuum evaporation, cathode sputtering, ion plating or spray plating;
3. A plastic coating layer is formed at the external surface of the metal coating layer by spray coating, dip coating, brush coating or paint spraying.

Preferably, after step 2, the sealing housing is shaped, and part or all of the sealing edge of the sealing area formed after packaging and sealing is removed.

### Embodiment 1

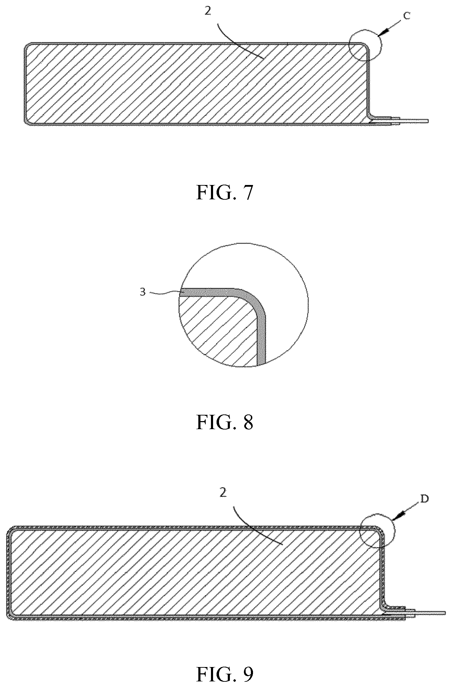

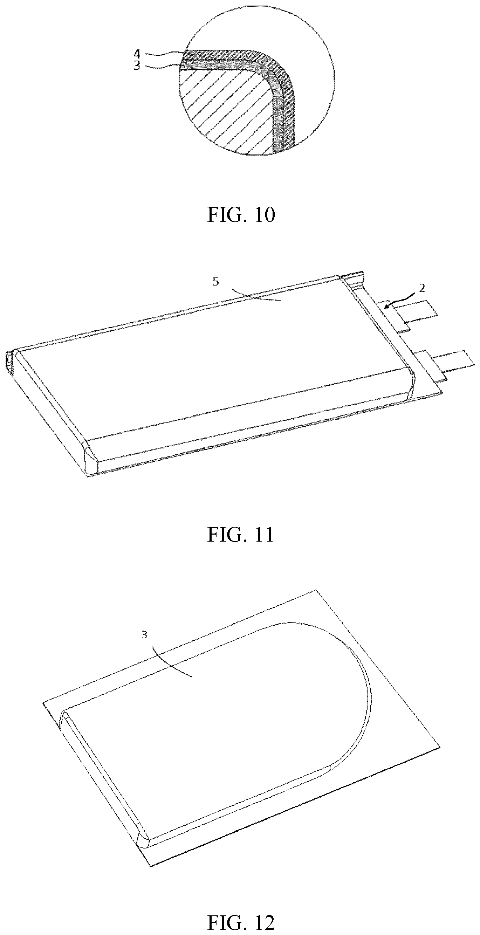

Preparation of the packaging housing for a Li-ion battery:
1. A sealing housing layer 3 of homopolymerized polypropylene material with a thickness of 25µm is prepared by laminating to fit the size of the bare cell 2, and then is sealed after the bare cell is packaged therein; the schematic diagrams are as shown in FIG. 7 and FIG. 8; the thickness of the sealing housing layer at the folding edge and the folding corner is no less than the thickness of the sealing housing layer at the flat surface, as shown in FIG.8;
2. A metal coating layer 4 of aluminum with a thickness of 15µm is formed at the external surface of the sealing housing layer 3 by vacuum evaporation, the schematic diagrams are shown in FIG. 9 and FIG. 10; as shown in FIG. 10, the thickness of the metal coating layer at the folding edge and the folding corner is no less than the thickness of the metal coating layer at the flat surface, and the formed cambered surfaces of the sealing housing layer and the metal coating layer are coaxial cambered surfaces;
3. A plastic coating layer 5 of polyamide resin with a thickness of 10µm is formed on the metal coating layer 4 by spray coating. The thickness of the plastic coating layer at the folding edge and the folding corner is no less than the thickness of the plastic coating layer at the flat surface, and the cambered surfaces of the sealing housing layer, the metal coating layer and the plastic coating layer are coaxial cambered surfaces.

The overall thickness of the prepared packaging housing for a Li-ion battery is 50µm, upon calculation based on a battery with a thickness of 3.0mm, with respect to a conventional battery with a 100µm thick packaging composite film, the packaging structure of Embodiment 1 can increase the energy density of the battery for 3.6%.

### Embodiment 2

Preparation of the packaging housing for a Li-ion battery:
1. A sealing housing layer 3 of homopolymerized polypropylene with a thickness of 20µm is prepared by injection molding to fit the size of the bare cell 2, and then is sealed after the bare cell is packaged therein;
2. The sealing edge of the sealing housing layer 3 is cut off and is thermally shaped, so as to remove the sealing edge at one side;
3. A metal coating layer 4 of aluminum with a thickness of 12µm is formed at the external surface of the sealing housing layer 3 by vacuum evaporation;
4. A plastic coating layer 5 of polyamide resin with a thickness of 8µm is formed on the metal coating layer 4 by spray coating.

The thicknesses of the prepared sealing housing layer, the metal coating layer and the plastic coating layer at the folding edge and the folding corner are the same as the thicknesses at the flat surface thereof, respectively; moreover, cambered surfaces of the sealing housing layer, the metal coating layer and the plastic coating layer formed at the folding edge or the folding corner are coaxial cambered surfaces.

The overall thickness of the prepared packaging housing for a Li-ion battery is 40µm, upon calculation based on a battery with a thickness of 3.0mm, a width of 30mm and a 1.0 mm wide single side folding edge, with respect to a conventional battery with a 100µm thick packaging composite film, the packaging structure of Embodiment 2 can increase the energy density of the battery for 8%. The schematic diagram of the appearance of the product is as shown in FIG. 11.

### Embodiment 3

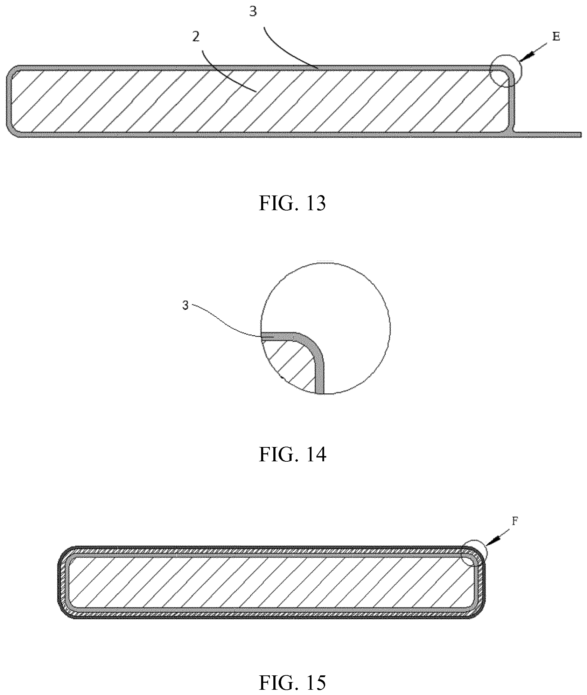

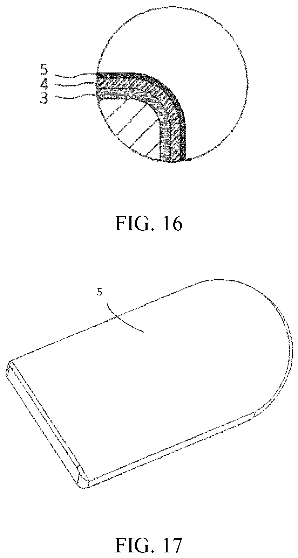

A sealing housing layer 3 of homopolymerized polypropylene with a thickness of 30µm are prepared to fit the size of the bare cell by laminating, and then is sealed after the bare cell is packaged therein, as shown in FIGs. 12∼14. As shown in FIG. 14, the thickness of the sealing housing layer at the folding edge and the folding corner is the same as the thickness of the sealing housing layer at the flat surface. The sealing edges of the sealing housing layer 3 are cut off and are thermally shaped, so as to remove the sealing edge of the sealing area. Then, a metal coating layer 4 of aluminum with a thickness of 15µm is formed at the external surface of the sealing housing layer 3 by vacuum evaporation; subsequently, a plastic coating layer 5 of polyamide resin with a thickness of 15µm is formed on the metal coating layer 4 by spray coating, as shown in FIG. 15 and FIG. 16. As shown in FIG. 16, the thicknesses of the prepared sealing housing layer, the metal coating layer and the plastic coating layer at the folding edges and the folding corners are the same as the thicknesses at the flat surfaces thereof, respectively; moreover, cambered surfaces of the sealing housing layer, the metal coating layer and the plastic coating layer formed at the folding edge or the folding corner are coaxial cambered surfaces.

The overall thickness of the prepared packaging housing for a Li-ion battery is 60µm. Compared with the conventional packaging structure, the metal layer of the housing of the sealing structure prepared in this method is not stretched, so as to possess high water-proof and sealing reliability; moreover, since the sealing edge is removed, the appearance is concise and aesthetic. The schematic diagram of the appearance of the product is as shown in FIG. 17.

The present application is disclosed as above with reference to preferred embodiments, which is not use to limit the claims, the person skilled in the art can make various variations and modifications without departing from the concept of the present application, therefore, the protection scope of the present application shall be based on the scope defined by the claims of the present application.

## Claims

1. A packaging housing for a Li-ion battery, **characterized in that**, a bare cell of the Li-ion battery is packaged by the packaging housing, the packaging housing comprises, successively from inside to outside, a sealing housing layer, a metal coating layer and a plastic coating layer; after the sealing housing layer packages the bare cell of the Li-ion battery and then is sealed, the metal coating layer and the plastic coating layer are successively provided on an external surface of the sealing housing layer.

2. The packaging housing for a Li-ion battery according to claim 1, **characterized in that**, a thickness of the metal coating layer at a folding edge and a folding corner of the packaging housing is no less than a thickness of the metal coating layer at a flat surface of the packaging housing; preferably, thicknesses of the sealing housing layer and the plastic coating layer at the folding edge and the folding corner of the packaging housing are no less than thicknesses of the sealing housing layer and the plastic coating layer at the flat surface of the packaging housing, respectively; further preferably, thicknesses of the sealing housing layer, the metal coating layer and the plastic coating layer at the folding edge and the folding corner of the packaging housing are the same as thicknesses of the sealing housing layer, the metal coating layer and the plastic coating layer at the flat surface of the packaging housing, respectively.

3. The packaging housing for a Li-ion battery according to claim 1, **characterized in that**, cambered surfaces of the sealing housing layer, the metal coating layer and the plastic coating layer formed at a folding edge or a folding corner are coaxial cambered surfaces.

4. The packaging housing for a Li-ion battery according to claim 1, **characterized in that**, a material of the sealing housing layer is at least one selected from a group consisting of polyethylene, polypropylene, ester of polyethylene or polypropylene and ionic crosslinking material of polyethylene or polypropylene; the polyethylene is selected from a group consisting of low density polyethylene, medium density polyethylene and high density polyethylene; the polypropylene is selected from a group consisting of homopolymerized polypropylene, block copolymerized polypropylene and irregular polypropylene; a material of the metal coating layer is at least one selected from a group consisting of metal, metal alloy, metal oxide and ceramics; the metal is selected from a group consisting of aluminum, iron, silver, copper, nickel, manganese, tin, titanium, zirconium and vanadium; a material of the plastic coating layer is at least one selected from a group of polyamide resin, polyolefin, polycarbonate and fluorine-containing resin.

5. The packaging housing for a Li-ion battery according to claim 4, **characterized in that**, the material of the plastic coating layer is added with a decorative additive.

6. The packaging housing for a Li-ion battery according to claim 1, **characterized in that**, before the metal coating layer is provided, the sealing housing layer is processed by shaping, the shaping is to remove part or all of a sealing edge of a sealing area formed after sealing.

7. The packaging housing for a Li-ion battery according to claim 1, **characterized in that**, a thickness of the sealing housing layer is 15~1000µm, preferably 15∼100µm; a thickness of the metal coating layer is 1∼500µm, preferably 5∼200µm; a thickness of the plastic coating layer is 5~1000µm, preferably 5∼200µm.

8. A method for preparing the packaging housing for a Li-ion battery according to any one of claims 1~7, **characterized in that**, comprising: firstly preparing a sealing housing layer which fits a shape of a bare cell of the Li-ion battery, packaging the bare cell into the sealing housing layer and sealing the sealing housing layer; providing a metal coating layer at an external surface of the sealing housing layer by vacuum evaporation, cathode sputtering, ion plating or spray plating, and then providing a plastic coating layer at an external surface of the metal coating layer by spray coating, dip coating, brush coating or paint spraying.

9. The method according to claim 8, **characterized in that**, the sealing housing layer is formed by impact molding or injection molding; the sealing housing layer is shaped after the bare cell is packaged and sealed therein, and part or all of a sealing edge of a sealing area formed after packaging and sealing are removed.

10. A Li-ion battery, comprising a bare cell and the packaging housing for a Li-ion battery according to any one of claims 1~7.
